**Europäisches Patentamt**

**European Patent Office**

**Office européen des brevets**

(19)

(11) **EP 1 221 662 A2**

(12) ## EUROPEAN PATENT APPLICATION

(43) Date of publication:
**10.07.2002 Bulletin 2002/28**

(51) Int Cl.$^7$: **G06F 17/30**

(21) Application number: **02250065.6**

(22) Date of filing: **07.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **09.01.2001 KR 2001001130**

(71) Applicant: **SAMSUNG ELECTRONICS CO., LTD.**
**Suwon-City, Kyungki-do (KR)**

(72) Inventors:
• **Choi, Yang-lim**
  **Seongnam-si, Gyeonggi-do (KR)**

• Cho, Nam-ik,
  **301-1001 Dept. of Elect. Engineering**
  **Gwanak-gu, Seoul (KR)**
• Kwak, Jung-won,
  **301-1001 Dept. Elect. Engineering**
  **Gwanak-gu, Seoul (KR)**

(74) Representative: **Geary, Stuart Lloyd et al**
  **Venner, Shipley & Co.,**
  **20 Little Britain**
  **London EC1A 7DH (GB)**

(54) **Image retrieval method**

(57) An image retrieval method with improved performance in which a data image similar to a query image is retrieved by appropriately combining colour and texture features. The method for retrieving a data image similar to a query image in an image database containing a plurality of data images involves: calculating colour and texture distances between a query image and each data image in the image database; weighting the calculated colour and texture distances with predetermined weighting factors; calculating a feature distance between the query image and each data image by combining the weighted colour and texture distances by considering human's visual perception attributes; and determining the data image similar to the query image using the feature distance. According to the image retrieval method, data images similar to a query image can be retrieved based on the human visual perception mechanism by combining both colour and texture features extracted from image regions. In particular, the image region based retrieval enables much accurate retrieval of more objects and many kinds of information from a single image.

## FIG. 1

```
        START

CALCULATE COLOR AND TEXTURE DISTANCES
   BETWEEN A QUERY IMAGE AND EACH        — 102
 DATA IMAGE STORED IN IMAGE DATABASE

  WEIGHT COLOR AND TEXTURE DISTANCES     — 104
 WITH PREDETERMINED WEIGHTING FACTORS

CALCULATE DISTANCE BETWEEN QUERY AND
  DATA IMAGE BY COMBINING COLOR AND      — 106
 TEXTURE DISTANCES WEIGHTED BASED ON
     HUMAN PERCEPTION ATTRIBUTES

   DETERMINE DATA IMAGE SIMILAR TO
  QUERY IMAGE USING THE COMBINED         — 108
     COLOR AND TEXTURE DISTANCE

         END
```

**EP 1 221 662 A2**

**Description**

The present invention relates to a method of searching a database of images, the method comprising calculating a feature distance between a query image and an image in the database to obtain a measure of the relevance of said image in the database, said feature distance being calculated by combining colour and texture feature distances.

In recent years, a sudden increase in multimedia data has stimulated research in the fields of data retrieval and databases for efficient multimedia data management. In particular, research in the field of image retrieval has focused on an alternative to existing text-based image retrieval methods and other advanced image retrieval methods. For text-based data retrieval, a great effort needs to be made to retrieve the desired data from a large-scale database, and it is unsuitable for partial-feature-based retrieval or quantitative data retrieval. To address this drawback, there have been approaches to retrieval using numeric feature descriptors which well represent the features of multimedia data.

Colour and texture features, which are dominant characteristics in human visual perception, can be expressed by feature descriptors. According to a conventional image retrieval method, an image database in which data images are indexed by a feature descriptor is built up, and desired images are retrieved from the image database based on the feature descriptor. An example of a conventional colour feature based image retrieval method includes extracting colour vectors, quantizing the colour vectors, getting a representative colour vector from the quantized colour vectors, and retrieving image data using the representative colour vector. A conventional texture feature based image retrieval method uses the co-occurrence matrix, the Gaussian Markov Random Field (GMRF) models, etc. A recent method of texture feature extraction uses a Gabor filter that enables a multi-channel approach suitable for the human perception mechanism of visual images.

In the conventional image retrieval methods, colour and texture based data retrievals are separately carried out, and colour and texture features are extracted from the entire image. For this reason, the conventional methods cannot be applied for an image having a plurality of objects therein or expressed in multiple colours and textures. Either the colour or texture features are available for retrieving particular image data. Thus, there is a problem of incorrect image retrieval results.

To solve these problems, another conventional image retrieval method retrieves a target image in the vector space formed for both colour and texture vector components. Here, the vector space is formed through simple summations of the colour and texture vector components, thereby increasing dimensionality of the vector space. Thus, there is a need to redefine a distance function to the vector space with the increased dimensionality and to calculate a weighting factor for each component, which is relatively burdensome. The computations are highly complex and the results may be incorrect.

In general terms, the present invention provides a method for retrieving a data image similar to a query image using a feature distance calculated by combining colour and texture distances by considering human's visual perception attributes.

Preferably, a method according to the present invention is characterised in that the colour distance and the texture distance are weighted by respective functions of both the colour entropy of the query image and texture sample areas such that the relative contributions of the colour distance and the texture distance to said feature distance substantially correspond to the relative importance of colour and texture in human perception of the similarity between said images.

In one embodiment, the present invention provides a method for retrieving a data image similar to a query image in an image database containing a plurality of data images, the method comprising: (a) calculating color and texture distances between a query image and each data image in the image database; (b) weighting the calculated color and texture distances with predetermined weighting factors; (c) calculating a feature distance between the query image and each data image by combining the weighted color and texture distances by considering human's visual perception attributes; and (d) determining the data image similar to the query image using the feature distance. Preferably, before step (a), the image retrieval method further comprises: (pa-1) segmenting the query image and each data image into a plurality of regions using color features; and (pa-2) determining sample regions in the query image and each data image for extraction of texture features.

Preferably, step (a) comprises: (a1) generating colour vectors of the plurality of regions using the colour features and calculating colour distances; and (a2) generating texture vectors of the plurality of regions using the texture features and calculating texture distances.

Preferably, step (pa-1) comprises quantizing colour vectors of the query image and each data image. This step of quantizing the colour vectors may comprise: (pa-1-1) performing peer group filtering on the query image and each data image for noise removal and smoothing effects; and (pa-1-2) clustering filtered pixel values of the query image and each data image using the generalised Lloyd algorithm.

Preferably, the image retrieval method further comprises: defining a J-value indicating colour uniformity in each pixel of the query image and each data image which have undergone quantization; storing the J-value in each pixel of the query image and each data image to obtain J-images; segmenting each J-image into a plurality of regions by a predetermined segmentation method; repeating the segmentation of each J-image to obtain a map of over-segmented regions for each J-image; and obtaining a final map for each J-image by merging the over-segmented regions based on correlation of colour;

Preferably, step (pa-1-2) comprises applying a predetermined algorithm to increase the number of resulting clusters or to merge the resulting clusters.

In the image retrieval method, the colour features are expressed by a colour feature descriptor $f_c(I_k)$ with a representative colour vector and the percentage of the representative colour vector for each region. The colour feature descriptor $f_c(I_k)$ may be expressed by:

$$f_c(I_k) = \{(\bar{c}_{k1}, p_{ki}), (\bar{c}_{k2}, p_{k2}), \ldots, (\bar{c}_{kN_k}, p_{kN_k})\}$$

where $k$ is a positive integer indicating the serial number of each region, $\bar{c}_{ki}$ is the i-th representative colour vector of the k-th region ($i = 1,2,..,N$), $p_{ki}$ is the percentage of the i-th colour representative colour vector in the k-th region, and $N_k$ is the number of the representative colour vectors in the k-th region.

Preferably, the image retrieval method further comprises indexing a feature vector space by a representative colour and its percentage in each segmented region. This step of indexing the feature vector space may comprise: assigning representative colours to grid points in a colour space having a grid structure; and storing the result of the assignment as a table in a database.

In the image retrieval method, the colour distance between each colour vector of each region of the query image and each colour vector of each region of each data image may be calculated using:

$$d_c(I_1, I_2) = \sum_{i=1}^{N_1} p_{1i}^2 + \sum_{i=1}^{N_2} p_{2i}^2 - \sum_{i=1}^{N_1} \sum_{j=1}^{N_2} 2a_{1i,2j} \, p_{1i} p_{2j}$$

where, supposing that $T_d$ is the maximum distance by which similarity of two colours is determined, $\alpha$ is a predetermined scaling coefficient, $d_{max} = \alpha T_d$, and $d_{ij}$ is the Euclidean distance $\|c_i - c_j\|$ between two colour vectors $c_i$ and $c_j$, $a_{ij} = 1 - \frac{d_{ij}}{d_{max}}$ if $d_{ij} \leq T_d$, and $a_{ij} = 0$ if $d_{ij} > T_d$.

In the image retrieval method, preferably, step (a2) uses the Gabor function. In step (a2), the texture vectors of the plurality of regions may be generated using the Gabor function having N frequency channels and M orientation channels, where N and M are predetermined positive integers.

In the image retrieval method, the texture features are expressed by a texture feature descriptor $f_t(I_k)$:

$$f_t(I_k) = \{(m_{k11}, \sigma_{k11}), (m_{k12}, \sigma_{k12}), \ldots, (m_{k1M}, \sigma_{k1M}), (m_{k21}, \sigma_{k21}), \ldots, (m_{kij}, \sigma_{kij}), \ldots, (m_{kNM}, \sigma_{kNM})\}$$

where $m_{kij}$ is the means value of the pixel values of the i-th frequency channel and j-th orientation channel for region $I_k$, and $\sigma_{kij}$ is the deviation of the pixel values of the i-th frequency channel and the j-th orientation channel for region $I_k$. In step (a2), the texture distance between each colour vector of each region of the query image and each colour vector of each region of each data image may be calculated using:

$$d_t(I_1, I_2) = \sum_{i=1}^{N} \sum_{j=1}^{M} \left| \frac{m_{1ij} - m_{2ij}}{\sigma(m_{ij})} \right| + \sum_{i=1}^{N} \sum_{j=1}^{M} \left| \frac{\sigma_{1ij} - \sigma_{2ij}}{\sigma(\sigma_{ij})} \right|.$$

Preferably, step (pa-2) comprises: (pb-1) obtaining a grid map of the query image and each data image; and (pb-2) obtaining a texture sample of a desired size for each region based on the grid map. In this case, step (pb-1) may comprise: (pb-1-1) taking a rectangle $M(i,j)$ having largest side lengths for a sample region, where $0 \# I \# n$ and $0 \# j \# m$; (pb-1-2) dividing the rectangle $M(i,j)$ into sub-rectangles each having a $l \times l$ size; and (pb-1-3) obtaining a grid map for the sample region using a predetermined function which outputs 1 if all the divided grids belong to the sample region, and otherwise, outputs 0, the predetermined function expressed by:

$$M_{grid}(i,j) = \begin{cases} 1 & if \ p_{ij}(x,y) \subset I_k \ for \ \forall (x,y) \\ 0 & otherwise \end{cases}$$

where $0 \le i \le$

$$\left[\frac{n}{l}\right]$$

-1, $0 \le j \le$

$$\left[\frac{m}{l}\right]$$

-1, $0 \le x \le l-1$, $0 \le y \le l-1$, and $p_{ij}(x,y)$ is a point that belongs to rectangle $M(il + x, jl + y)$. Preferably, after step (pb-1-3), the image retrieval method further comprises: (pb-1-4) transforming the grid map obtained in step (pb-1-3) to a grid distance map by repeating computations with:

$$\{M^d_{grid}(i,j)\}_0 = M_{grid}(i,j),$$

*and*

$$\{M^d_{grid}(i,j)\}_n = \min(\{M^d_{grid}(i,j-1)\}_{n-1}, \{M^d_{grid}(i-1,j)\}_{n-1}, \{M^d_{grid}(i,j+1)\}_{n-1}, \{M^d_{grid}(i+1,j)\}_{n-1}) + 1,$$

$$if \ \{M^d_{grid}(i,j)\}_{n-1} = \{M^d_{grid}(i,j)\}_n, \ M^d_{grid}(i,j) = \{M^d_{grid}(i,j)\}_n,$$

and
(pb-1-5) performing region growing in every direction from a seed of the grid map, which has the largest distance in the grid and is expressed by
$(a,b) = \overset{arg \ max}{\underset{(i,j)}{}} \{M^d_{grid}(i,j)\}$, to satisfy the relation $M^d_{grid}(i,j) > 0$ until the maximum area rectangle is extracted.

Preferably, the image retrieval method further comprise fitting the maximum area rectangle extracted in step (pb-1-5) to the desired size of the texture sample by wrapping. Alternatively, the image retrieval method may further comprise fitting the maximum area rectangle extracted in step (pb-1-5) to the desired size of the texture sample by mirroring.

In the image retrieval method, step (b) may comprise: (b-1) placing the colour and texture distances in 2-dimentional vector spaces defined by the respective colour and texture distances and their predetermined weighting factors; and (b-2) projecting the result of the projection onto the 2-dimensional vector spaces onto a 1-dimensional distance space based on the human visual perception mechanism.

In the image retrieval method, preferably, the predetermined weighting factor to the colour distance is determined based on the distribution of representative colours. More preferably, the predetermined weighting factor to the colour distance is determined by:

$$\omega_c = 1 - \sum_{i=1}^{N} p_{qi} \log_{10}\left(\frac{1}{p_{qi}}\right)$$

where $p_{qi}$ is the percentage of the i-th representative colour of the query image region.

Preferably, the texture distance is defined by:

$$d_t'(I_q, I_1) = a^{\left(\frac{A(s)}{A(I_1)} + (count(I_1)-1)\right)} d_t(I_q, I_1)$$

where $I_q$ denotes the query image or each region of the query image, $s$ denotes the sample region, $A(\cdot)$ denotes the area of the sample region of a desired size, $count(\cdot)$ is the number of wrappings done to obtain the desired size of sample region, and $a$ is a constant.

Preferably, the predetermined weighting factor to the texture distance is determined based on the area of an initial sample region extracted from the query image and the area of an sample region extracted from each data image. More preferably, the predetermined weighting factor to the texture distance is determined by:

$$\omega_t = \frac{1}{a^{\left(\frac{A(s)}{A(I_q)} + (count(I_q)-1)\right)}}$$

where $I_q$ denotes the query image or each region of the query image, $s$ denotes the sample region, $A(\cdot)$ denotes the area of the sample region of a desired size, $count(\cdot)$ is the number of wrappings done to obtain the desired size of sample region, and $a$ is a constant.

Preferably, the image retrieval method further comprises, before step (b-1), normalising each of the colour and texture distances. In this case, normalising each of the colour and texture distances may be performed using Gaussian normalisation. Preferably, normalising each of the colour and texture distances comprises: under the assumption that that sequence $v_k$ is a Gaussian sequence, performing normalisation within the range of $[!1, 1]$ using $v_{m,k} = \frac{\mu_{m,k} - \mu_k}{3\sigma_k}$ based on the means value $\mu_k$ and deviation $\sigma_k$ of sequence $v_k$; and mapping the result of the normalisation into the range of $[0, 1]$ using $v_{m,k}' = \frac{v_{m,k} + 1}{2}$.

Preferably, normalising each of the colour and texture distance comprises normalising the texture distance by updating the means value $\mu_t$ and deviation $\sigma_t$ of texture distances by excluding a largest texture distance until the condition of $k \times \frac{\mu_c}{\sigma_c} \le \frac{\mu_t}{\sigma_t}$, where $k$ is a constant, is satisfied.

In the image retrieval method, step (b-2) may comprise projecting the colour and texture distances onto a 1-dimensional distance space using:

$$d(I_q, I_1) = W_c d_c(I_q, I_1)\left(1 + \frac{2}{\pi}\tan^{-1}\frac{d_t'(I_q, I_1)}{d_c(I_q, I_1)}\right) + W_t d_t'(I_q, I_1)\left(1 + \frac{2}{\pi}\tan^{-1}\frac{d_c(I_q, I_1)}{d_t'(I_q, I_1)}\right)$$

where $W_c = \frac{\bar{\omega}_c}{\bar{\omega}_c + \bar{\omega}_t}$, and $W_t = \frac{\bar{\omega}_t}{\bar{\omega}_c + \bar{\omega}_t}$.

An embodiment of the present invention will now be described, by way of example, with reference to the accompanying drawings, in which:

Figure 1 is a flowchart illustrating the major steps of a preferred embodiment of an image retrieval method according to the present invention;
Figure 2 is a flowchart illustrating an example of indexing data images of an image database by colour feature;
Figure 3A shows an example of an image segmented according to its colour features;
Figure 3B shows an image expressed with quantized colour vectors for the image of Figure 3A;
Figure 3C shows a J-image;
Figure 3D shows an image after segmentation is completed;
Figure 4 is a flowchart illustrating indexing data images of an image database by texture feature;
Figure 5 shows an example of the spatial frequency response equal to half of the 2-D Gabor function;
Figure 6 is a flowchart of an example of taking a texture sample from an image region;
Figure 7 illustrates a feature of the present invention;
Figure 8A shows examples of data image regions for a given query image region, which are retrieved by combining colour and texture features;

Figure 8B shows examples of data image regions for a given query image region, which are retrieved based on only colour feature; and

Figure 8C shows examples of data image regions for a given query image region, which are retrieved by considering texture feature on the candidate data image regions having significant colour distances.

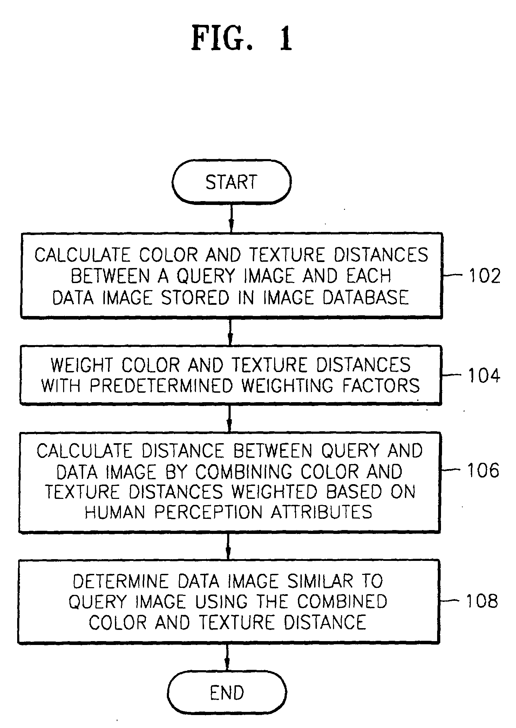

Referring to Figure 1, the image retrieval method according to the present invention involves calculating colour and texture distances between a query image and each of the data images stored in the image database (Step 102).

In the present embodiment, it is assumed that each of the data images stored in the image database is segmented into a plurality of regions according to colour and/or texture features, and an image region that a user wants to search for in the image database exists in one data image segmented into a plurality of image regions. That image region which is searched for is referred to as a query image region. In the image retrieval method according to the preferred embodiment of the present invention, a data image similar to the query image region is retrieved.

First, a step of extracting colour (feature) vectors for the query image and data images and calculating colour distances will be described.

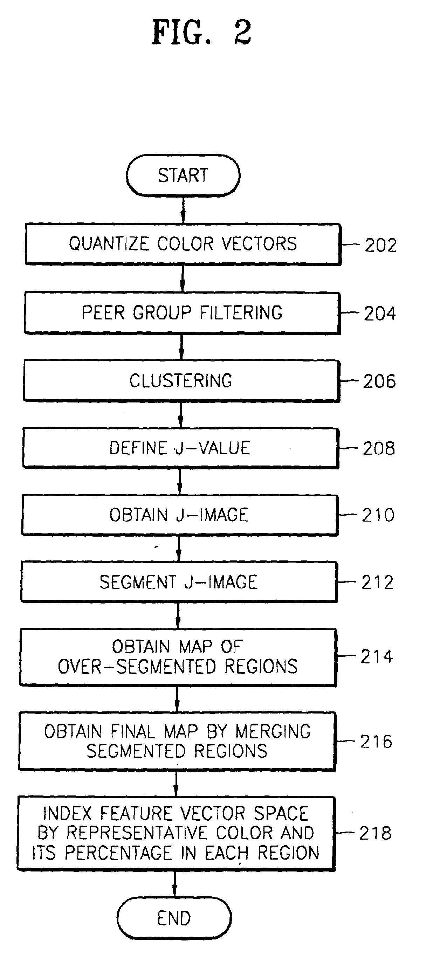

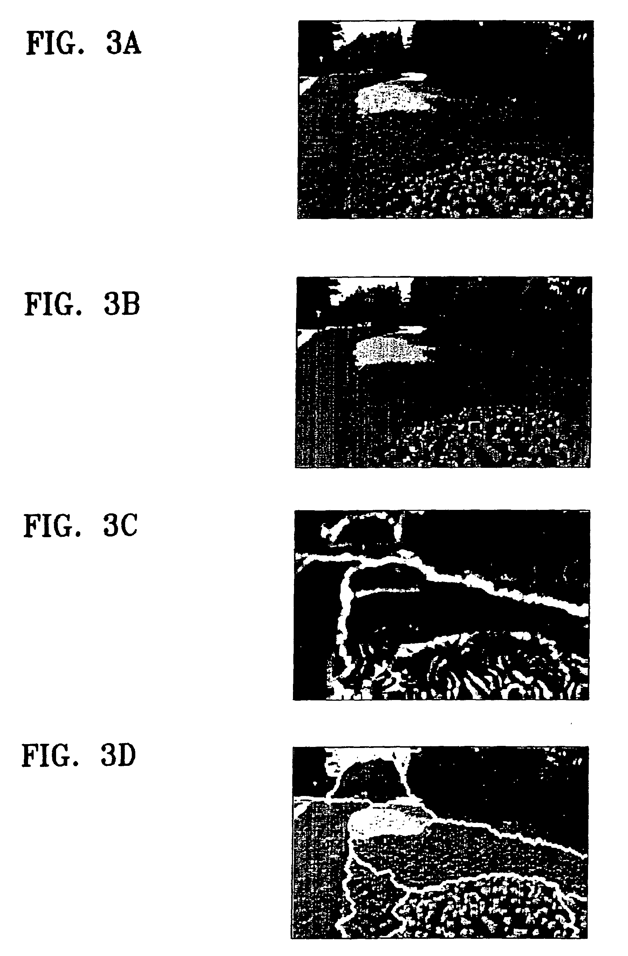

Referring to Figure 2, colour vectors for the query image and data images are quantized (Step 202). Figure 3A shows an example of an image segmented according to its colour features, and Figure 3B shows an image expressed with the quantized colour vectors for the image of Figure 3A. Next, peer group filtering is performed on the images with the quantized colour vectors for noise removal and smoothing effects (Step 204). Peer group filtering is described in WO-A-0046749, Next, filtered pixel values are clustered using the generalised Lloyd algorithm (GLA) (Step 206). Although the number of clusters is fixed for the GLA, a predetermined algorithm can be applied to increase the number of clusters or merge the clusters.

Next, a J-value as an index of colour uniformity in each pixel after the quantization is defined (Step 208). For the images expressed by the quantized colour values, the J-value indicating pixel colour uniformity is stored in each of the pixels to obtain a J-image (Step 210). Figure 3C shows the J-image obtained in Step 210. The J-image is segmented into a plurality of regions by a predetermined method. The J-value based image segmentation is disclosed in WO-A-0065839. A map of over-segmented regions is obtained by iterating segmentation (Step 214). Next, a final map is obtained by merging segmented regions based on correlation of colour (Step 216), thereby completing the image segmentation. Figure 3D shows an image after the segmentation is completed.

Next, a feature vector space is indexed by the representative colour and its percentage in each segmented region (Step 218). For example, a colour feature describer $f_c(I_k)$ of each segmented region is expressed using a representative colour vector and the percentage of the representative colour vector:

$$f_c(I_k) = \{(\bar{c}_{k1}, p_{ki}), (\bar{c}_{k2}, p_{k2}), ..., (\bar{c}_{kN_k}, p_{kN_k})\} \tag{1}$$

where $k$ is a positive integer indicating the serial number of each region, $\bar{c}_{ki}$ is the I-th representative colour vector ($i = 1,2,.., N$) of the k-th region, $p_{ki}$ is the percentage of the i-th representative colour vector, and $N_k$ is the number of the representative colour vectors in the k-th region. Then, the representative colours are assigned to grid points in a colour space having a grid structure. Next, the indexed results are stored as a table in a database, thereby completing indexing of the feature vector space by the colour vectors.

The distance between colour vectors of a query image region and a data image region is expressed by:

$$d_c(I_1, I_2) = \sum_{i=1}^{N_1} p_{1i}^2 + \sum_{i=1}^{N_2} p_{2i}^2 - \sum_{i=1}^{N_1} \sum_{j=1}^{N_2} 2a_{1i,2j}\, p_{1i} p_{2j}\,. \qquad ...(2)$$

In formula (2), supposing that $T_d$ is the maximum distance by which similarity of two colours is determined, $\alpha$ is a predetermined scaling coefficient, $d_{max} = {}_\alpha T_d$, and $d_{ij}$ is the Euclidean distance $\|c_i - c_j\|$ between two colour vectors $c_i$ and $c_j$, $a_{ij} = 1 - \dfrac{d_{ij}}{d_{max}}$ if $d_{ij} \leq T_d$, and $a_{ij} = 0$ if $d_{ij} > T_d$.

Next, a step of extracting texture (feature) vectors and calculating texture distances will be described.

The reason for the wide use of multi-channel filtering in recent years as a texture analysis approach is that the similarity of this multi-channel filtering to human visual perception is evidenced by psychophysical and psychophysiological experiments. The mammalian visual tissue has a perception mechanism of tuning visual signals into narrow band frequencies and orientations. In other words, the visual perception mechanism of humans can be explained with a plurality of channels each having a bandpass filter with particular frequency and orientation angle domains. The important factor in multi-channel filtering texture analysis is to define the functional characteristics of the channels and the number of channels. In addition, extraction of correct texture features from the image passed through the filters, the relation between each channel, and appropriate combination of texture features from different channels are also important considerations. The most effective function for modelling texture features is the Gabor function.

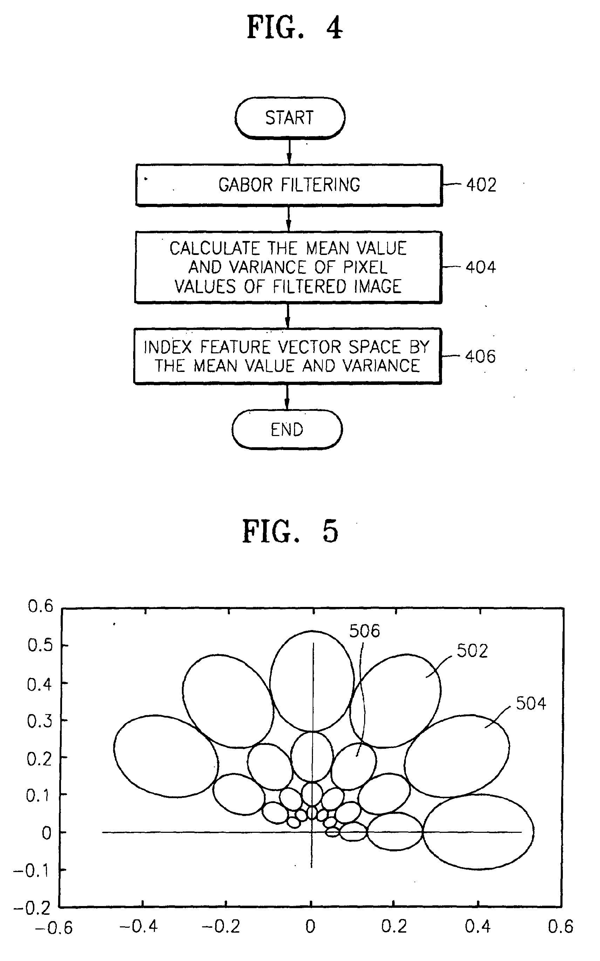

Referring to Figure 4, images are filtered by Gabor filtering (Step 402). A 2-dimensional (2-D) Gabor function used for the Gabor filtering of images can be defined as a complex sinusoidal function, which is a modulation of a 2-D Gaussian function the spectrum of which is shifted in the frequency domain. This function is expressed by:

$$h(x,y) = g^t(x^t, y^t)\exp[2\pi f(U_x + V_y)] \tag{3}$$

$$(x^t, y^t) = (x\cos\phi + y\sin\phi - x\sin\phi + y\cos\phi) \tag{4}$$

$$g(x,y) = \frac{1}{2\pi\lambda\delta^2}\exp[-(x^2/\lambda^2 + y^2)/2\delta^2] \tag{5}$$

$$H(\mu,\nu) = \exp\{-2\pi^2\delta^2[(\mu^t - U^t)^2 + (\nu^r - V^t)^2]\} \tag{6}$$

where $\lambda$ is the aspect ratio, and $\delta^2$ is variance.

Supposing that the radial bandwidth is B and the orientation bandwidth is $\Sigma$, the radial bandwidth B and the orientation bandwidth $\Sigma$ of the Gabor filter are determined such that about half of the spatial-frequency response for each channel filter is the same to reduce redundancy in the Gabor filter.

Referring to Figure 5, a first channel 502 has the same scale as a second channel 504, but different orientation. The first channel 502 has a different scale from a third channel 506, but the same orientation. Gabor filtering for an image is implemented by convolving the image with the Gabor function, thereby outputting different images through filters having different orientations and scales.

The mean value and variance of the pixel values of the filtered image are calculated (Step 404). The mean value and variance of the pixel values obtained by convolution of the image with the Gabor filter represent texture features of the image. Next, the feature vector space is indexed by the mean value and variance of the pixel values (Step 406). The image segmented into a plurality of regions is expressed using the Gabor filter having N frequency channels and M orientation channels:

$$f_t(I_k) = \{(m_{k11}, \sigma_{k11}), (m_{k12}, \sigma_{k12}), \dots, (m_{k1M}, \sigma_{k1M}), (m_{k21}, \sigma_{k21}), \dots,$$

$$(m_{kij}, \sigma_{kij}), \dots, (m_{kNM}, \sigma_{kNM}) \tag{7}$$

where $m_{kij}$ is the mean value of the pixel values of the i-th frequency channel and j-th orientation channel for image region $I_k$, and $\sigma_{kij}$ is the deviation of the pixel values of the i-th frequency channel and the j-th orientation channel for image region $I_k$.

A distance function for two image regions based on their texture vectors is expressed as:

$$d_t(I_1, I_2) = \sum_{i=1}^{N}\sum_{j=1}^{M}\left|\frac{m_{1ij} - m_{2ij}}{\sigma(m_{ij})}\right| + \sum_{i=1}^{N}\sum_{j=1}^{M}\left|\frac{\sigma_{1ij} - \sigma_{2ij}}{\sigma(\sigma_{ij})}\right| \quad \dots(8)$$

According to the present invention, texture features are extracted from an image region having an arbitrary shape. An image region selected by a user has an irregular shape. Colour information is irrelevant to the shape of the image region because it is attainable from the number and distribution of colour pixels in the image region. Supposing that texture is defined as an irradiance pattern that can be discriminated by its proportion in the spatial frequency domain, the texture feature is affected by pixel patterns and the shape of image regions. It is not easy to apply the Gabor filter that outputs the convolution of an image with the Gabor function to an image having an arbitrary shape. When an image is retrieved through the Gabor filter using texture samples having different sizes, matching efficiency is poor compared with an image retrieval based on the same-sized samples. For this reason, in the present embodiment, there is a need to take rectangular samples from image regions having an arbitrary shape, which are the same in size and represent the texture feature of corresponding regions. In this sampling process, the rectangular samples should be large enough to include the irradiance pattern of the pixels, such that accurate texture information is extracted from the relevant image regions.

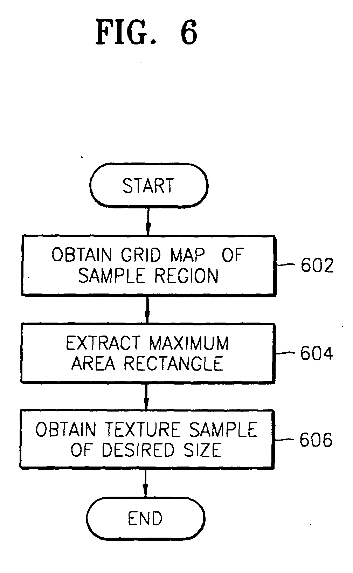

Referring to Figure 6, a grid map for the sample region is obtained to take a texture sample (Step 602). In particular, a rectangle $M(i,j)$ (where, $0 \leq i \leq n$ and $0 \leq j \leq m$), which has largest side lengths, is taken from the sample region. Next, the rectangle $M(i,j)$ is divided into sub-rectangles each having a $l \times l$ size. Then, a grid map for the sample region is made with the following predetermined function, which outputs 1 if all the divided grids belong to the sample region, and otherwise outputs 0:

$$M_{grid}(i,j) = \begin{cases} 1 & if \ p_{ij}(x,y) \subset I_k \ for \ \forall(x,y) \\ 0 & otherwise \end{cases} \qquad ...(9)$$

where $0 \leq i \leq$

$$\left[\frac{n}{l}\right]$$

$-1$, $0 \leq j \leq$

$$\left[\frac{m}{l}\right]$$

$-1$, $0 \leq x \leq l-1$, $0 \leq y \leq l-1$, and $p_{ij}(x,y)$ is a point that belongs to rectangle $M(il + x, jl + y)$.

Next, a maximum area rectangle is extracted (Step 604). The grid map obtained in Step 602 is transformed into a grid distance map by repeated computations with:

$$\{M^d_{grid}(i,j)\}_0 = M_{grid}(i, j), \qquad (10)$$

and

$$\{M^d_{grid}(i,j)\}_n = \min(\{M^d_{grid}(i,j-1)\}_{n-1}, \{M^d_{grid}(i-1,j)\}_{n-1}, \{M^d_{grid}(i,j+1)\}_{n-1}, \{M^d_{grid}(i+1,j)\}_{n-1})+1,$$

$$if \ \{M^d_{grid}(i,j)\}_{n-1} = \{M^d_{grid}(i,j)\}_n, \ M^d_{grid}(i,j) = \{M^d_{grid}(i,j)\}_n. \qquad (11)$$

From a seed of the grid distance map, $(a,b)= \underset{(i,j)}{\arg\max} \{M^d_{grid}(i,j)\}$, which has the largest distance in the map, region growing is carried out in every direction to satisfy the relation $M^d_{grid}(i,j) > 0$ until the maximum area rectangle is extracted.

Next, a texture sample having a desired size is obtained (Step 606). The maximum area rectangle obtained in Step 604 is fit to the desired size of the texture sample by wrapping. Alternatively, the maximum area rectangle may be fit to the desired size of the texture sample by mirroring. In this case, orientation of the texture should be maintained constant after the mirroring.

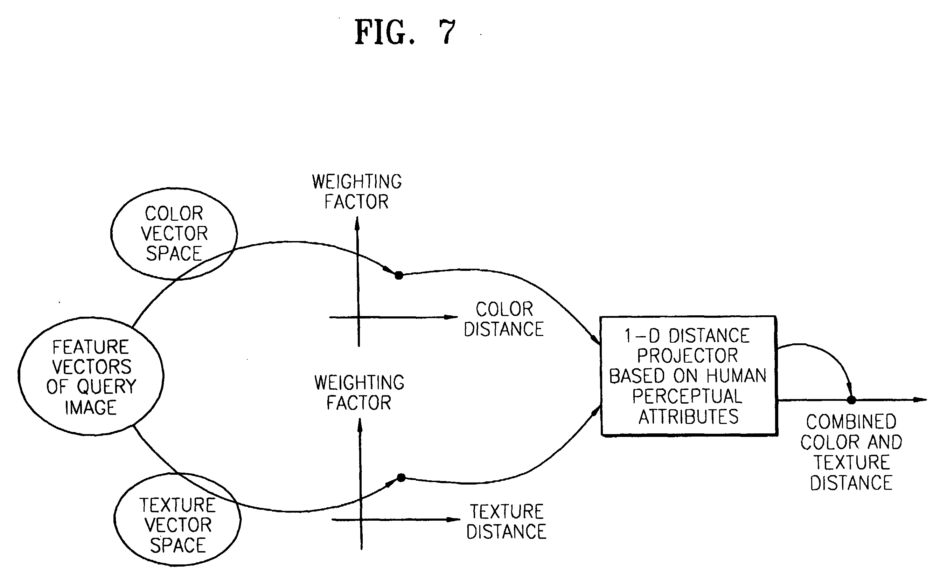

Referring to Figure 1, after Step 102, colour and texture distances are weighted with predetermined weighting factors (Step 104). In the present embodiment of the image retrieval method according to the present invention, colour and texture vectors of the data images are compared with those of a query image in the respective vector spaces to separately calculate the colour and texture distances. Referring to Figure 7, the calculated colour and texture distances are projected onto 2-D vector spaces with weighting factors. The feature values on the 2-D vector spaces are projected onto a 1-D distance space by considering human perceptual attributes.

In particular, the distance between the colour vector of a query image region and the colour vector of a data image is defined by the distance function of formula (2) above. A weighting factor applied in this step is determined according to the colour distribution. For example, if a dominant colour is present, colour reliability is great. On the contrary, if a plurality of representative colours are present in similar proportion without a dominant colour, colour reliability is low. The colour distribution is expressed by the entropy function. When the colour distribution is uniform over an image region, the entropy function has a larger value. When the colour distribution is concentrated on a small portion of the image region, the entropy function has a smaller value. Based on this, a weighting factor to the colour feature is defined as:

$$\omega_c = 1 - \sum_{i=1}^{N} p_{qi} \log_{10}\left(\frac{1}{p_{qi}}\right) \qquad \ldots(12)$$

where $p_{qi}$ is the percentage of the i-th representative colour in the query image region. The colour-weighting factor $\omega_c$ is set to 0.1 if $\omega_c < 0.1$.

For the texture feature vectors of the query image region and the data image, texture distance is determined using the function having formula (8), in the same manner as for the colour distance. When the method described with reference to Figure 6 is applied to take a texture sample, texture reliability may be low if the texture sample is small. Although the size of the extracted texture sample can be fit to a desired size by wrapping, unsatisfactory texture features may result with increased number of wrappings, due to discontinuity at the wrapping boundaries. Accordingly, in the present embodiment, each initial texture distance $d_t(I_q, I_1)$ is multiplied by a weighting factor.

$$d'_t(I_q, I_1) = a^{\left(\frac{A(s)}{A(I_1)} + (count(I_1) - 1)\right)} d_t(I_q, I_1) \qquad (13)$$

where $I_q$ denotes the query image or query image region, $s$ denotes the texture sample of a desired size, $A(\cdot)$ denotes the area of the texture sample of a desired size, $count(\cdot)$ is the number of wrappings done to obtain the desired size of texture sample, and $a$ is a constant.

In a similar way, a weighting factor to the texture feature is defined as:

$$\omega_t = \frac{1}{a^{\left(\frac{A(s)}{A(I_q)} + (count(I_q) - 1)\right)}} \qquad \ldots(14)$$

where $A(\cdot)$ denotes the area of the texture sample of a desired size.

Next, the distance between the query image region and data image is calculated by combination of the colour and texture distances weighted by considering human perception attributes (Step 106). As shown in Figure 7, the colour and texture distances weighted with the respective weighting factors in Step 104 are projected onto a 1-D distance space through a projector that is based on the human visual perception attributes. To combine the two discrete features, each weighted colour and texture distance need to normalise into similar scales. The normalisation is performed using Gaussian normalisation in the present embodiment. Under the assumption that sequence $v_k$ is a Gaussian sequence, normalisation is performed within the range of [!1, 1] by formula (15) using the mean value $\mu_k$ and deviation $\sigma_k$ of sequence $v_k$ with a 99% confidence factor. Next, the result is normalised within the range [0,1] by formula (16).

$$v_{m,k} = \frac{v_{m,k} - \mu_k}{3\sigma_k} \qquad (15)$$

$$v'_{m,k} = \frac{v_{m,k} + 1}{2} \qquad (16)$$

According to this normalisation method using formula (16), values less than 0 or greater than 1 are set to 0 or 1, respectively. This method is effective to prevent the range of the values to be normalised from being narrow due to the presence of extremely large or small values.

For the colour distance function, the distance between colour vectors is meaningless if a data image has no similar colour component to the query image, and a deviation in colour distance is small between candidate data images. On the contrary, the distance between texture vectors has a great deviation between candidate data images, and thus the mean value $\mu_t$ and deviation $\sigma_t$ of texture distances is updated by excluding the largest texture distance until the following condition (17) is satisfied, and then the texture distance is normalised using the updated mean value $\mu_t$ and deviation $\sigma_t$:

$$k \times \frac{\mu_c}{\sigma_c} \le \frac{\mu_t}{\sigma_t} \tag{17}$$

where $k$ is a constant.

The normalised colour and texture vector distances are combined by the following function (18) by weighting the colour and texture vector distances with weighting factors:

$$d(I_q, I_1) = W_c d_c(I_q, I_1) \left( 1 + \frac{2}{\pi} \tan^{-1} \frac{d_t'(I_q, I_1)}{d_c(I_q, I_1)} \right) + W_t d_t'(I_q, I_1) \left( 1 + \frac{2}{\pi} \tan^{-1} \frac{d_c(I_q, I_1)}{d_t'(I_q, I_1)} \right) \quad ...(18)$$

where $W_c = \dfrac{\bar{\omega}_c}{\bar{\omega}_c + \bar{\omega}_t}$, and $W_t = \dfrac{\bar{\omega}_t}{\bar{\omega}_c + \bar{\omega}_t}$.

Next, a data image similar to the query image are determined using the combined colour and texture distance (Step 108). As can be inferred from the function (18), when one of the texture and colour distances is much smaller than the other, each of the texture and colour distances is weighted with different weighting factors, which reflects well the human visual perception mechanism in which similarity is perceived by one influential texture or colour feature. In the image retrieval method according to the present invention, each multidimensional feature vector is projected onto respective 2-D vector spaces each having distance and weighting factor as elements, and then onto a 1-D distance space that defines a combined distance of discrete feature vectors. Accordingly, overall computations are relatively simple. In addition, the projector used in the image retrieval method according to the present invention, which uses a small number of weighting factors which adaptively vary depending on, for example, the distribution of feature vectors, enables colour and texture vector based image retrieval according to human visual perception.

As described above, according to the present invention, colour and texture features extracted from each data image region segmented by colour are separately projected as feature vectors onto respective 2-D vector spaces each having elements of weighting factor and corresponding feature vector distance from a query image, and in turn projected onto a 1-D distance space based on human visual perception attributes. Thus, the image retrieval according to the present invention closely matches the human visual perception mechanism, and overall computations are relatively simple.

To verify performance of the image retrieval method according to the present invention, simulation tests were carried out using 100 image samples (384H256 or 256H384) designed by Corel Corporation. After segmenting the image samples into 2456 image regions in total using a colour based segmentation algorithm, and colour and texture vectors were extracted from each segmented region using colour vector and texture vector extraction algorithms. Here, colour feature vectors were extracted in the LUV colour space, and texture feature vectors were extracted by applying a Gabor filter having 4 frequency channels and 6 orientation channels to texture samples of a 64H64 size. As a result, forty-eight texture vector components were extracted from each region.

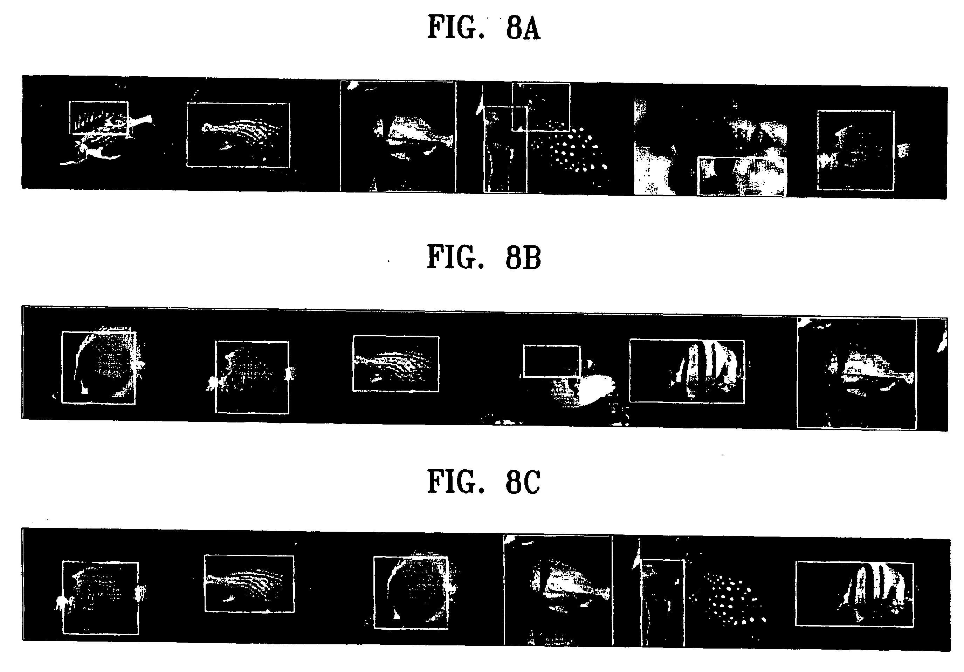

Figure 8A shows examples of data image regions for a given query image region, which are retrieved by combining colour and texture features. Figure 8B shows examples of data image regions for a given query image region, which are retrieved based on only colour feature. Figure 8C shows examples of data image regions for a given query image region, which are retrieved by considering texture feature on the candidate data image regions having significant colour distances. Referring to FIGS. 8A through 8C, data images similar to the respective query images (here, fish's bodies) are retrieved based on data image regions, i.e., fish's body regions, in which both colour and texture of the scales are distinct. The resultant data images are satisfactory in view of human perception attributes. Thus, according to the present invention, high-level features of an image can be effectively expressed by the appropriate combination of low-level features, colour and texture.

In the image retrieval method according to the present invention described above, data images similar to a query image can be retrieved based on the human visual perception mechanism by combining both colour and texture features extracted from image regions. In particular, the image region based retrieval enables accurate retrieval of many objects and many kinds of information from a single image. The distribution of lower-level features, colour and texture, in the 2-D vector spaces is projected onto a 1-D distance space, and thus higher-level features can be effectively expressed with a small number of weighting factors and reduced vector computations.

An apparatus for performing a method according to the present invention comprises a computer system implementing a database containing a plurality of images. The computer system includes means for receiving a query image and is programmed to calculate the feature distance between the query image and at least some of the images in the database as described above. If the feature distance meets a predetermined criteria, the corresponding image in the database is retrieved as a search result.

The image retrieval method according to the present invention may be embodied as a program stored on a computer usable medium, including but not limited to storage media such as magnetic storage media and optically readable media. The program codes may be transmitted by electrical or electromagnetic signals. A functional program, code and code segments, used to implement the present invention can be derived by a skilled computer programmer from the description of the invention contained herein.

**Claims**

1. A method for retrieving a data image similar to a query image using a feature distance calculated by combining color and texture distances by considering human's visual perception attributes.

2. A method of searching a database of images, the method comprising calculating a feature distance between a query image and an image in the database to obtain a measure of the relevance of said image in the database, said feature distance is calculated by combining colour and texture feature distances, **characterised in that** the colour distance and the texture distance are weighted by respective functions of both the colour entropy of the query image and texture sample areas such that the relative contributions of the colour distance and the texture distance to said feature distance substantially correspond to the relative importance of colour and texture in human perception of the similarity between said images.

3. A method for retrieving a data image similar to a query image in an image database containing a plurality of data images, the method comprising:

   (a) calculating color and texture distances between a query image and each data image in the image database;
   (b) weighting the calculated color and texture distances with predetermined weighting factors;
   (c) calculating a feature distance between the query image and each data image by combining the weighted color and texture distances by considering human's visual perception attributes; and
   (d) determining the data image similar to the query image using the feature distance.

4. The method of claim 3, before step (a), further comprising:

   (pa-1) segmenting the query image and each data image into a plurality of regions using color features; and
   (pa-2) determining sample regions in the query image and each data image for extraction of texture features.

5. The method of claim 4, wherein step (a) comprises:

   (a1) generating color vectors of the plurality of regions using the color features and calculating color distances; and
   (a2) generating texture vectors of the plurality of regions using the texture features and calculating texture distances.

6. The method of claim 4, wherein step (pa-1) comprises quantizing color vectors of the query image and each data image.

7. The method of claim 6, wherein quantizing the color vectors comprises:

   (pa-1-1) performing peer group filtering on the query image and each data image for noise removal and smoothing effects; and
(pa-1-2) clustering filtered pixel values of the query image and each data image using the generalized Lloyd algorithm.

8. The method of claim 6, further comprising:

defining a J-value indicating color uniformity in each pixel of the query image and each data image which have undergone quantization;
storing the J-value in each pixel of the query image and each data image to obtain J-images;
segmenting each J-image into a plurality of regions by a predetermined segmentation method;
repeating the segmentation of each J-image to obtain a map of over-segmented regions for each J-image; and
obtaining a final map for each J-image by merging the over-segmented regions based on correlation of color;

9. The method of claim 8, further comprising indexing a feature vector space by a representative color and its percentage in each segmented region.

10. The method of claim 7, wherein step (pa-1-2) comprises applying a predetermined algorithm to increase the number of resulting clusters or to merge the resulting clusters.

11. The method of claim 5, wherein the color features are expressed by a color feature descriptor $f_c(I_k)$ with a representative color vector and the percentage of the representative color vector for each region.

12. The method of claim 11, wherein the color feature descriptor $f_c(I_k)$ is expressed by:

$$f_c(I_k) = \{(\bar{c}_{k1}, p_{ki}), (\bar{c}_{k2}, p_{k2}), ..., (\bar{c}_{kN_k}, p_{kN_k})\}$$

where $k$ is a positive integer indicating the serial number of each region, $\bar{c}_{ki}$ is the i-th representative color vector of the k-th region ($i = 1,2,..,N$), $p_{ki}$ is the percentage of the i-th color representative color vector in the k-th region, and $N_k$ is the number of the representative color vectors in the k-th region.

13. The method of claim 9, wherein indexing the feature vector space comprises:

assigning representative colors to grid points in a color space having a grid structure; and
storing the result of the assignment as a table in a database.

14. The method of claim 12, wherein the color distance between each color vector of each region of the query image and each color vector of each region of each data image is calculated using:

$$d_c(I_1, I_2) = \sum_{i=1}^{N_1} p_{1i}^2 + \sum_{i=1}^{N_2} p_{2i}^2 - \sum_{i=1}^{N_1} \sum_{j=1}^{N_2} 2a_{1i,2j} \, p_{1i} p_{2j}$$

where, supposing that $T_d$ is the maximum distance by which similarity of two colors is determined, $\alpha$ is a predetermined scaling coefficient, $d_{max} = \alpha T_d$, and $d_{ij}$ is the Euclidean distance $\|c_i - c_j\|$ between two color vectors $c_i$ and $c_j$, $a_{ij} = 1 - \frac{d_{ij}}{d_{max}}$ if $d_{ij} \leq T_d$, and $a_{ij} = 0$ if $d_{ij} > T_d$.

15. The method of claim 5, wherein step (a2) uses the Gabor function.

16. The method of claim 15, wherein, in step (a2), the texture vectors of the plurality of regions are generated using the Gabor function having N frequency channels and M orientation channels, where N and M are predetermined positive integers.

17. The method of claim 16, wherein the texture features are expressed by a texture feature descriptor $f_t(I_k)$:

$$f_t(I_k) = \{(m_{k11}, \sigma_{k11}), (m_{k12}, \sigma_{k12}), ..., (m_{k1M}, \sigma_{k1M}), (m_{k21}, \sigma_{k21}), ..., (m_{kij}, \sigma_{kij}), ..., (m_{kNM}, \sigma_{kNM})\}$$

where $m_{kij}$ is the means value of the pixel values of the i-th frequency channel and j-th orientation channel for region $I_k$, and $\sigma_{kij}$ is the deviation of the pixel values of the i-th frequency channel and the j-th orientation channel for region $I_k$.

**18.** The method of claim 17, wherein, in step (a2), the texture distance between each color vector of each region of the query image and each color vector of each region of each data image is calculated using:

$$d_t(I_1, I_2) = \sum_{i=1}^{N} \sum_{j=1}^{M} \left| \frac{m_{1ij} - m_{2ij}}{\sigma(m_{ij})} \right| + \sum_{i=1}^{N} \sum_{j=1}^{M} \left| \frac{\sigma_{1ij} - \sigma_{2ij}}{\sigma(\sigma_{ij})} \right|.$$

**19.** The method of claim 4, wherein step (pa-2) comprises:

(pb-1) obtaining a grid map of the query image and each data image; and
(pb-2) obtaining a texture sample of a desired size for each region based on the grid map.

**20.** The method of claim 19, wherein step (pb-1) comprises:

(pb-1-1) taking a rectangle $M(i,j)$ having largest side lengths for a sample region, where $0 \le l \le n$ and $0 \le j \le m$;
(pb-1-2) dividing the rectangle $M(i,j)$ into sub-rectangles each having a $l \times l$ size; and
(pb-1-3) obtaining a grid map for the sample region using a predetermined function which outputs 1 if all the divided grids belong to the sample region, and otherwise, outputs 0, the predetermined function expressed by:

$$M_{grid}(i, j) = \begin{cases} 1 & if \ p_{ij}(x, y) \subset I_k \ for \ \forall (x, y) \\ 0 & otherwise \end{cases}$$

where $0 \le i \le$

$$\left[ \frac{n}{l} \right]$$

$- 1, 0 \le j \le$

$$\left[ \frac{m}{l} \right]$$

$-1, 0 \le x \le l - 1, 0 \le y \le l - 1$, and $p_{ij}(x,y)$ is a point that belongs to rectangle $M(il + x, jl + y)$.

**21.** The method of claim 20, after step (pb-1-3), further comprising:

(pb-1-4) transforming the grid map obtained in step (pb-1-3) to a grid distance map by repeating computations with:

$$\{M^d_{grid}(i,j)\}_0 = M_{grid}(i,j),$$

*and*

$$\{M^d_{grid}(i,j)\}_n = \min(\{M^d_{grid}(i,j\text{-}1)\}_{n\text{-}1}, \{M^d_{grid}(i\text{-}1,j)\}_{n\text{-}1}, \{M^d_{grid}(i,j\text{+}1)\}_{n\text{-}1}, \{M^d_{grid}(i\text{+}1,j)\}_{n\text{-}1})+1,$$

$$\text{if } \{M^d_{grid}(i,j)\}_{n\text{-}1} = \{M^d_{grid}(i,j)\}_n, M^d_{grid}(i,j) = \{M^d_{grid}(i,j)\}_n,$$

and

(pb-1-5) performing region growing in every direction from a seed of the grid map, which has the largest distance in the grid and is expressed by $(a,b) = \underset{(i,j)}{\arg\max}\{M^d_{grid}(i,j)\}$, to satisfy the relation $M^d_{grid}(i,j) > 0$ until the maximum area rectangle is extracted.

**22.** The method of claim 21, further comprising fitting the maximum area rectangle extracted in step (pb-1-5) to the desired size of the texture sample by wrapping.

**23.** The method of claim 21, further comprising fitting the maximum area rectangle extracted in step (pb-1-5) to the desired size of the texture sample by mirroring.

**24.** The method of claim 4, wherein step (b) comprises:

(b-1) placing the color and texture distances in 2-dimentional vector spaces defined by the respective color and texture distances and their predetermined weighting factors; and
(b-2) projecting the result of the projection onto the 2-dimensional vector spaces onto a 1-dimensional distance space based on the human visual perception mechanism.

**25.** The method of claim 3, wherein the predetermined weighting factor to the color distance is determined based on the distribution of representative colors.

**26.** The method of claim 24, wherein the predetermined weighting factor to the color distance is determined by:

$$\omega_c = 1 - \sum_{i=1}^{N} p_{qi} \log_{10}(\frac{1}{p_{qi}})$$

where $p_{qi}$ is the percentage of the i-th representative color of the query image region.

**27.** The method of claim 24, wherein the texture distance is defined by:

$$d'_t(I_q,I_1) = a^{(\frac{A(s)}{A(I_1)}+(count(I_1)\text{-}1))} d_t(I_q,I_1)$$

where $I_q$ denotes the query image or each region of the query image, $s$ denotes the sample region, $A(\cdot)$ denotes the area of the sample region of a desired size, $count(\cdot)$ is the number of wrappings done to obtain the desired size of sample region, and $a$ is a constant.

**28.** The method of claim 24, wherein the predetermined weighting factor to the texture distance is determined based on the area of an initial sample region extracted from the query image and the area of an sample region extracted from each data image.

**29.** The method of claim 28, wherein the predetermined weighting factor to the texture distance is determined by:

$$\omega_t = \cfrac{1}{a^{\left(\frac{A(s)}{A(I_q)}+(count(I_q)-1)\right)}}$$

where $I_q$ denotes the query image or each region of the query image, $s$ denotes the sample region, $A(\cdot)$ denotes the area of the sample region of a desired size, $count(\cdot)$ is the number of wrappings done to obtain the desired size of sample region, and $a$ is a constant.

**30.** The method of claim 24, before step (b-2), further comprising normalizing each of the color and texture distances.

**31.** The method of claim 30, wherein normalizing each of the color and texture distances is performed using Gaussian normalization.

**32.** The method of claim 31, wherein normalizing each of the color and texture distances comprises:

under the assumption that that sequence $v_k$ is a Gaussian sequence, performing normalization within the range of [!1, 1] using $v_{m,k} = \frac{v_{m,k} - \mu_k}{3\sigma_k}$ based on the means value $\mu_k$ and deviation $\sigma_k$ of sequence $v_k$; and mapping the result of the normalization into the range of [0, 1] using $v'_{m,k} = \frac{v_{m,k} + 1}{2}$.

**33.** The method of claim 32, wherein normalizing each of the color and texture distance comprises normalizing the texture distance by updating the means value $\mu_t$ and deviation $\sigma_t$ of texture distances by excluding a largest texture distance until the condition of $k \times \frac{\mu_c}{\sigma_c} \le \frac{\mu_t}{\sigma_t}$, where $k$ is a constant, is satisfied.

**34.** The method of claim 24, wherein step (b-2) comprises projecting the color and texture distances onto a 1-dimensional distance space using:

$$d(I_q,I_1) = W_c d_c(I_q,I_1)\left(1+\frac{2}{\pi}\tan^{-1}\frac{d'_t(I_q,I_1)}{d_c(I_q,I_1)}\right) + W_t d'_t(I_q,I_1)\left(1+\frac{2}{\pi}\tan^{-1}\frac{d_c(I_q,I_1)}{d'_t(I_q,I_1)}\right)$$

where $W_c = \cfrac{\bar{\omega}_c}{\bar{\omega}_c + \bar{\omega}_t}$, and $W_t = \cfrac{\bar{\omega}_t}{\bar{\omega}_c + \bar{\omega}_t}$.

# FIG. 1

START

CALCULATE COLOR AND TEXTURE DISTANCES BETWEEN A QUERY IMAGE AND EACH DATA IMAGE STORED IN IMAGE DATABASE — 102

WEIGHT COLOR AND TEXTURE DISTANCES WITH PREDETERMINED WEIGHTING FACTORS — 104

CALCULATE DISTANCE BETWEEN QUERY AND DATA IMAGE BY COMBINING COLOR AND TEXTURE DISTANCES WEIGHTED BASED ON HUMAN PERCEPTION ATTRIBUTES — 106

DETERMINE DATA IMAGE SIMILAR TO QUERY IMAGE USING THE COMBINED COLOR AND TEXTURE DISTANCE — 108

END

# FIG. 2

```
            ┌─────────┐
            │  START  │
            └─────────┘
                 │
                 ▼
    ┌──────────────────────────┐
    │  QUANTIZE COLOR VECTORS   │──── 202
    └──────────────────────────┘
                 │
                 ▼
    ┌──────────────────────────┐
    │   PEER GROUP FILTERING    │──── 204
    └──────────────────────────┘
                 │
                 ▼
    ┌──────────────────────────┐
    │       CLUSTERING          │──── 206
    └──────────────────────────┘
                 │
                 ▼
    ┌──────────────────────────┐
    │      DEFINE J-VALUE       │──── 208
    └──────────────────────────┘
                 │
                 ▼
    ┌──────────────────────────┐
    │      OBTAIN J-IMAGE       │──── 210
    └──────────────────────────┘
                 │
                 ▼
    ┌──────────────────────────┐
    │      SEGMENT J-IMAGE      │──── 212
    └──────────────────────────┘
                 │
                 ▼
    ┌──────────────────────────┐
    │       OBTAIN MAP OF       │──── 214
    │   OVER-SEGMENTED REGIONS  │
    └──────────────────────────┘
                 │
                 ▼
    ┌──────────────────────────┐
    │ OBTAIN FINAL MAP BY MERGING│─── 216
    │     SEGMENTED REGIONS     │
    └──────────────────────────┘
                 │
                 ▼
    ┌──────────────────────────┐
    │ INDEX FEATURE VECTOR SPACE │
    │ BY REPRESENTATIVE COLOR AND│─── 218
    │ ITS PERCENTAGE IN EACH REGION│
    └──────────────────────────┘
                 │
                 ▼
            ┌─────────┐
            │   END   │
            └─────────┘
```

FIG. 3A

FIG. 3B

FIG. 3C

FIG. 3D

# FIG. 4

```
        ┌─────────┐
        │  START  │
        └─────────┘
             │
             ▼
┌─────────────────────────┐
│     GABOR FILTERING     │──── 402
└─────────────────────────┘
             │
             ▼
┌─────────────────────────┐
│  CALCULATE THE MEAN VALUE │
│   AND VARIANCE OF PIXEL   │──── 404
│  VALUES OF FILTERED IMAGE │
└─────────────────────────┘
             │
             ▼
┌─────────────────────────┐
│ INDEX FEATURE VECTOR SPACE BY │──── 406
│  THE MEAN VALUE AND VARIANCE  │
└─────────────────────────┘
             │
             ▼
        ┌─────────┐
        │   END   │
        └─────────┘
```

# FIG. 5

# FIG. 6

```
        ┌─────────────┐
        │    START    │
        └─────────────┘
               │
               ▼
   ┌───────────────────────┐
   │  OBTAIN GRID MAP  OF  │────── 602
   │     SAMPLE REGION     │
   └───────────────────────┘
               │
               ▼
   ┌───────────────────────┐
   │    EXTRACT MAXIMUM     │────── 604
   │    AREA RECTANGLE      │
   └───────────────────────┘
               │
               ▼
   ┌───────────────────────┐
   │  OBTAIN TEXTURE SAMPLE │────── 606
   │    OF DESIRED SIZE     │
   └───────────────────────┘
               │
               ▼
        ┌─────────────┐
        │     END     │
        └─────────────┘
```

FIG. 7

FIG. 8C

FIG. 8B

FIG. 8A